# FASCICULE DE BREVET EUROPEEN

(11) **EP 3 362 380 B1**
(45) Date de publication et mention de la délivrance du brevet: **23.04.2025**
(21) Numéro de dépôt: 16806210.7
(22) Date de dépôt: 13.10.2016
(51) Int. Cl.: B65G 1/04, B62D 1/28

(54) **CHARIOT A GUIDAGE AUTOMATIQUE POUR LE TRANSPORT ET/OU LA MANUTENTION D'UNE CHARGE**
WAGEN MIT AUTOMATISCHER FÜHRUNG ZUM TRANSPORT UND/ODER ZUR HANDHABUNG EINER LAST
CARRIAGE WITH AUTOMATIC GUIDANCE FOR TRANSPORT AND/OR HANDLING OF A LOAD

(30) Priorité: 13.10.2015 FR 1559698
(43) Date de publication de la demande: 22.08.2018
(73) Titulaire: EXOTEC, 59170 Croix (FR)
(72) Inventeur: MOULIN, Romain, 75014 Paris (FR); HEITZ, Renaud, 59650 Villeneuve d'Ascq (FR)
(74) Mandataire: Ermeneux, Bertrand
(86) Numéro de dépôt international: PCT/FR2016/052650
(87) Numéro de publication internationale: WO 2017/064428

(56) Documents cités:
- EP-A1- 1 243 499
- WO-A1-2015/070841
- FR-A1- 2 574 039
- JP-A- 2007 283 958
- JP-A- S59 114 156
- JP-A- S6 452 574
- TW-B- 474 885
- US-A- 4 515 235
- ANONYMOUS: "Nouveaux chariots rétractables Fenwick Best Value", ZONEINDUSTRIE.COM, 5 November 2014 (2014-11-05), pages 1 - 2, XP093012742, Retrieved from the Internet <URL:https://www.zoneindustrie.com/Actualite/Nouveaux-chariots-retractables-Fenwick-Best-Value-12530.html> [retrieved on 20230110]

## Description

### 1. Domaine de l'invention

Le domaine de l'invention est celui de la logistique.

Plus précisément, l'invention concerne un chariot à guidage automatique.

L'invention trouve notamment une application dans la manutention et le transport de pièces ou de produits en entrepôt

### 2. État de la technique

La croissance importante du commerce en ligne a directement impacté les stratégies de gestion des flux de commande et la manipulation des produits au sein d'un entrepôt logistique.

Il est bien connu d'automatiser les tâches de transport dans un entrepôt pour gagner en vitesse d'acheminement.

Ainsi, on a pensé à utiliser des chariots auto guidés pour transporter des caisses contenant des produits jusqu'à une zone de préparation de commandes.

On connaît des chariots autoguidés utilisés pour transporter des rayonnages d'un entrepôt jusqu'à un point de collecte de produit par un opérateur dans ces rayonnages. Bien souvent, le châssis de ces robots est relié par des suspensions à quatre roues.

Un inconvénient des chariots autoguidés connus est que leur mobilité est affectée lorsque la charge sur les différentes roues du chariot n'est pas équilibrée du fait d'une répartition non uniforme des produits dans la caisse ou sur l'étagère qui est transportée, où lorsqu'ils roulent sur un sol irrégulier.

Par ailleurs, afin d'éviter qu'en l'absence de charge à transporter, l'adhérence des roues sur le sol soit fortement réduite, et limite les capacités d'accélération et de décélération du chariot, on cherche par ailleurs à alourdir le chariot autoguidé pour pré-comprimer les suspensions.

Ceci présente l'inconvénient d'augmenter l'énergie nécessaire pour déplacer le chariot et donc de réduire son autonomie.

Un autre inconvénient de ces chariots autoguidés connus est que lorsque la charge est trop importante, les suspensions se retrouvent comprimées à leur maximum. La répartition du poids de la charge portée par le plateau est alors transmise telle quelle aux roues. On ne peut alors pas répartir le poids de la charge sur chacune des roues.

Parmi ces chariots à guidage automatique connus, certains peuvent être configurés pour avoir des essieux montés sur boggies, disposés l'un à l'avant, l'autre à l'arrière d'une caisse ou voiture.

Cette technique de chariot autoguidé sur boggie présente les mêmes inconvénients que les techniques précédentes.

Un autre inconvénient de ces chariots autoguidés sur boggies est qu'ils ne peuvent pas tourner sur eux-mêmes.

On connait par ailleurs du document US4,515,235 A ou du document EP 1 243 499 A1 un chariot autoguidé présentant un châssis porteur comprenant deux balanciers s'étendant respectivement vers l'avant et vers l'arrière du chariot, équipés chacun d'une roue folle. Dans le document US4,515,235 A, ces balanciers sont montés pivotants l'un par rapport à l'autre autour d'un axe fixé à une plateforme porteuse du chariot. Dans le document EP 1 243 499 A1 le châssis porteur se positionne sous un second chariot équipé de quatre roues folles pour le tracter, les balanciers de ce châssis porteur étant solidarisés par quatre pinces rétractables à la plateforme du second chariot. JP 2007 283958 A et JP2007283958A divulguent eux aussi des chariots à guidage automatique dont le châssis comportent des balanciers. Plus particulièrement les documents US4,515,235 A, JP 2007 283958 A et JP2007283958A divulguent chacun un chariot à guidage automatique selon le préambule de la revendication 1.

### 3. Objectifs de l'invention

L'invention a donc notamment pour objectif de pallier les inconvénients de l'état de la technique cités ci-dessus.

Plus précisément l'invention a pour objectif de fournir un chariot à guidage automatique pour le transport et/ou la manutention d'une charge dont toutes les roues adhèrent convenablement au sol, que le chariot soit en charge ou à vide.

Un autre objectif de l'invention est de fournir une telle technique de chariot à guidage automatique dans laquelle l'adhérence des roues au sol est directement proportionnelle au poids transporté.

Un objectif de l'invention est également de proposer une telle technique de chariot à guidage automatique qui maintienne le niveau d'adhérence des roues motrices, quelle que soit la répartition de la charge transportée.

Un autre objectif de l'invention est de fournir une telle technique de chariot à guidage automatique qui limite les problèmes de transfert de charge lors des phases d'accélération et de décélération.

L'invention a également pour objectif de proposer une technique de chariot à guidage automatique dont l'autonomie en énergie est accrue.

Encore un objectif de l'invention est de fournir une telle technique de chariot à guidage automatique qui soit simple à mettre en œuvre, fiable et d'un coût de revient réduit.

### 4. Exposé de l'invention

Ces objectifs, ainsi que d'autres qui apparaîtront par la suite sont atteints à l'aide d'un chariot à guidage automatique pour le transport et/ou la manutention d'une charge.

L'invention concerne ainsi un véhicule autoguidé, aussi connu sous l'acronyme AGV (acronyme de « Automated guided vehicle » en anglais). Ce véhicule autoguidé peut être équipé d'un ou plusieurs bras de préhension d'objets, sans sortir du cadre de l'invention.

Selon l'invention, un tel chariot à guidage automatique comprend un châssis principal destiné à recevoir la charge et un châssis porteur comprenant deux balanciers montés pivotants l'un par rapport à l'autre à l'aide de moyens de pivotement, s'étendant respectivement vers l'avant et l'arrière du chariot et équipés chacun d'au moins une roue folle,
un des balanciers étant monté sur deux roues à entraînement différentiel dont l'axe est situé dans le plan transversal du châssis principal,
le chariot comprenant des moyens d'articulation du châssis principal par rapport au balancier s'étendant vers l'avant et par rapport au balancier s'étendant vers l'arrière, configurés de sorte que l'assemblage du châssis principal avec le châssis porteur soit sensiblement isostatique.

Ainsi, de façon inédite, l'invention propose de mettre en œuvre deux balanciers pour répartir le poids de la charge portée par le châssis principal de manière uniforme entre les roues à entraînement différentiel et les roues folles, quelle que soit cette charge.

La mise en œuvre des balanciers permet en outre de limiter le poids du chariot à guidage automatique, ce qui lui confère de meilleures performances en termes d'autonomie et de vitesse de déplacement notamment.

Il convient de noter que dans l'ensemble de la description de la présente demande de brevet, on se réfère à une direction d'avance du chariot lorsqu'on emploie les termes avant, arrière, droite et gauche du chariot.

En outre, la répartition de charge s'effectue de manière équivalente entre l'avant et l'arrière, mais également entre la droite et la gauche du chariot.

Par ailleurs, l'invention propose de placer les roues à entraînement différentiel dans le plan transversal du chariot, qui est le plan médian vertical orthogonal à l'axe longitudinal du chariot à guidage automatique, afin d'augmenter l'adhérence de celles-ci et ainsi optimiser le transfert du couple moteur au sol.

Selon un mode de réalisation avantageux de l'invention, l'axe de pivotement des balanciers l'un par rapport à l'autre est situé dans le plan transversal du chariot.

Ainsi, on évite qu'un couple s'exerce sur l'axe des roues à entraînement différentiel.

Selon l'invention, les moyens d'articulation comprennent une première, une deuxième et une troisième paires de bielles, les bielles de chaque paire de bielles étant montées en vis-à-vis de chaque côté du plan sagittal du chariot,
la première paire de bielles et la deuxième paire de bielles étant solidarisées à l'un des balanciers et la troisième paire de bielles étant solidarisée à l'autre balancier, les axes de chacune des bielles des première et deuxième paires de bielles s'étendant en le coupant jusqu'à un même axe transversal, de sorte à former une liaison pivot entre le balancier auxquelles les première et deuxième paires de bielles sont solidarisées et le châssis principal.

On entend ici par plan sagittal le plan médian vertical qui passe par l'axe longitudinal du chariot.

Selon un mode de réalisation particulièrement avantageux de l'invention, l'axe transversal s'étend sensiblement au niveau du point le plus bas du chariot.

La mise en œuvre de deux paires de bielles dont les axes longitudinaux sont sécants sur un axe transversal sensiblement au niveau du point le plus bas du chariot en contact avec le sol réduit, voire annule les effets de transfert de masse au cours des phases d'accélération et décélération du chariot à guidage automatique.

Selon un mode de réalisation qui ne fait pas partie de l'invention, les moyens d'articulation comprennent au moins une première et une deuxième paires d'articulations élastiques solidarisées respectivement au balancier s'étendant vers l'avant et au balancier s'étendant vers l'arrière, les articulations élastiques de chacun des première et deuxième paires d'articulations élastiques étant montées en vis-à-vis de chaque côté du plan sagittal du chariot.

Ainsi, le cisaillement des articulations élastiques permet de reprendre la variation selon l'axe longitudinal de la position des balanciers.

De plus, le mouvement des balanciers est amorti par les articulations élastiques.

Selon un mode de réalisation avantageux de l'invention, au moins un des balanciers est équipé de deux roues folles montées sur celui-ci dans des positions symétriques par rapport au plan sagittal du chariot.

En écartant les deux roues folles du plan sagittal, le chariot peut alors être guidé par un dispositif de guidage au sol, telle une ligne le long de laquelle il se déplace à cheval.

Selon un mode de réalisation préférentiel de l'invention, les deux roues à entraînement différentiels sont entraînées en rotation par deux moteurs commandés de façon indépendante, fixés au même balancier que les roues à entraînement différentiel.

Ainsi, le chariot à guidage automatique est apte à tourner sur lui-même pour effectuer un changement de direction, par exemple lors du démarrage.

Selon un mode de réalisation particulier de l'invention, les moyens de pivotement des balanciers l'un par rapport à l'autre comprennent deux pivots ou deux rotules montés sur les balanciers dans le plan transversal, du côté gauche et droit du chariot.

Selon un mode de réalisation particulier de l'invention, les moyens de pivotement des balanciers l'un par rapport à l'autre comprennent deux articulations élastiques montées entre les balanciers dans le plan transversal, du côté gauche et droit du chariot.

Selon un mode de réalisation particulièrement avantageux de l'invention, les articulations élastiques sont des silentblocs.

Dans d'autres modes de réalisation de l'invention, les articulations élastiques peuvent être toutes autres articulations élastiques de type connu.

### 5. Liste des figures

D'autres caractéristiques et avantages de l'invention apparaîtront plus clairement à la lecture de la description suivante de deux modes de réalisation de l'invention, donnés à titre de simples exemples illustratifs et non limitatifs, et des dessins annexés parmi lesquels :
- La figure 1 est une vue en perspective d'un premier exemple de mode de réalisation d'un chariot à guidage automatique selon l'invention ;
- La figure 2a est une vue en perspective d'une alternative de mode de réalisation d'un chariot à guidage automatique ne faisant pas partie de l'invention ;
- La figure 2b est une vue en coupe verticale d'un côté du chariot à guidage automatique présenté sur la figure 2a.

### 6. Description détaillée de l'invention

### 6.1. Premier exemple de mode de réalisation de l'invention

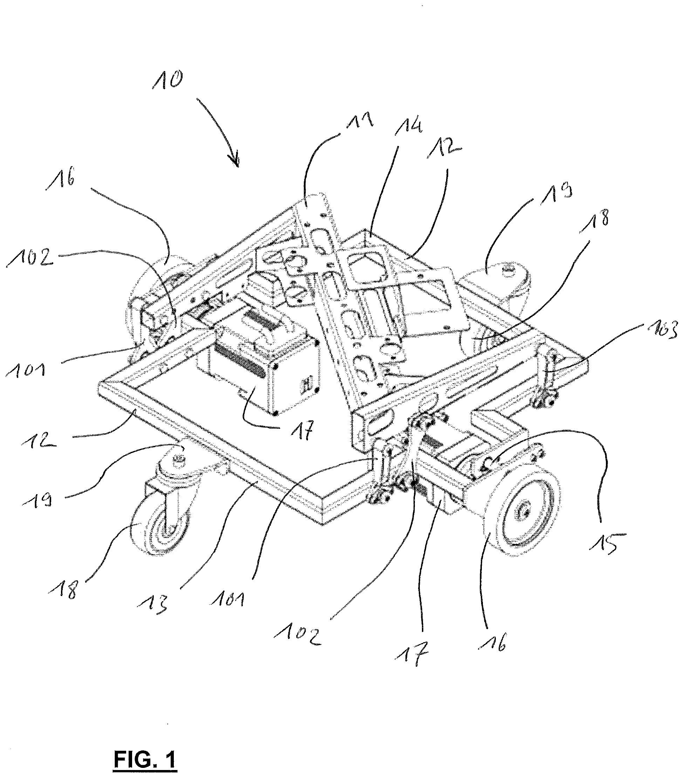

On a illustré sur la **figure 1****,** un exemple de mode de réalisation d'un chariot à guidage automatique 10 selon l'invention, dédié au transport et/ou à la manutention d'une charge. Ce chariot autoguidé 10 comprend un châssis principal 11 destiné à recevoir une charge supporté par un châssis porteur 12 assurant la liaison au sol du chariot à guidage automatique 10.

Pour cela, le châssis porteur 12 est composé d'un premier balancier 13 s'étendant vers l'avant du chariot autoguidé 10 et d'un second balancier 14 s'étendant vers l'arrière. Les cadres des balanciers 13 et 14 sont liés entre eux de chaque côté par un pivot 15 dont l'axe de pivotement est situé dans le plan transversal du chariot à guidage automatique 10.

Comme on peut le constater sur la figure 1, le châssis principal 11 est articulé par rapport au châssis porteur 12 à l'aide de trois paires de bielles 101, 102 et 103. Pour cela, les bielles de chaque paire de bielles 101, 102 et 103 sont montées en vis-à-vis sur le châssis principal 11 de chaque côté du plan sagittal du chariot à guidage automatique 10.

Par ailleurs, les bielles d'une première paire de bielles 101 et d'une deuxième paire de bielles 102 sont solidarisées par leurs extrémités au cadre du premier balancier 13 et au châssis principal 11. Chaque bielle de la première paire de bielles et de la deuxième paire de bielles est disposée de sorte à avoir un axe longitudinal qui s'étend pour couper un même axe transversal. Ainsi, on obtient une liaison pivot autour de cet axe transversal entre le châssis principal 11 et le premier balancier 13.

Cet axe transversal est localisé dans ce mode de réalisation de l'invention sensiblement au niveau du point de contact des roues 16, 18 avec le sol, ce qui a pour effet de diminuer fortement, voire de supprimer, les effets de transfert de masse de la charge entre les roues, lors des phases d'accélération et décélération du chariot autoguidé 10.

Par ailleurs, les bielles d'une troisième paire de bielles 103 sont par leurs extrémités, solidarisées au cadre du second balancier 14 et au châssis principal 11, afin d'assurer l'articulation du châssis principal 11 avec le châssis porteur 12. On obtient ainsi un ensemble châssis principal 11 - châssis porteur 12 sensiblement isostatique.

Pour permettre le déplacement du chariot à guidage automatique 10, le système de liaison au sol comprend deux roues motrices 16 à entraînement différentiel dont l'axe est situé dans le plan médian, transversal dudit châssis porteur 12. L'entraînement en rotation des deux roues motrices 16 est assuré par deux moteurs 17 à commandes indépendantes qui sont montés comme les deux roues motrices 16 sur le cadre du balancier 13. Ces deux moteurs 17 sont logés dans un volume intérieur du châssis porteur 12 délimité par les cadres du premier et du second balancier 13, 14.

On notera que l'entraînement différentiel des roues motrices 16 centrales peut permettre au chariot autoguidé 10 de tourner sur lui-même.

En outre, le premier et le second cadre 13, 14 formant balancier comprennent chacun une roue folle 18. Ces roues folles 18 sont fixées par des pattes 19 aux extrémités des cadres des balanciers, dans le plan sagittal du chariot à guidage automatique 10.

Enfin, comme on peut le voir sur la figure 1, les roues motrices 16 et l'axe de pivotement des balanciers 13 et 14 sont situées à mi-distance par rapport aux deux roues folles 18. Ainsi, la charge est sensiblement répartie à 50 % sur les roues motrices 16 et à 25 % sur chacune des roues folles 18.

### 6.2. Autres exemples de mode de réalisation ne faisant pas partie de l'invention

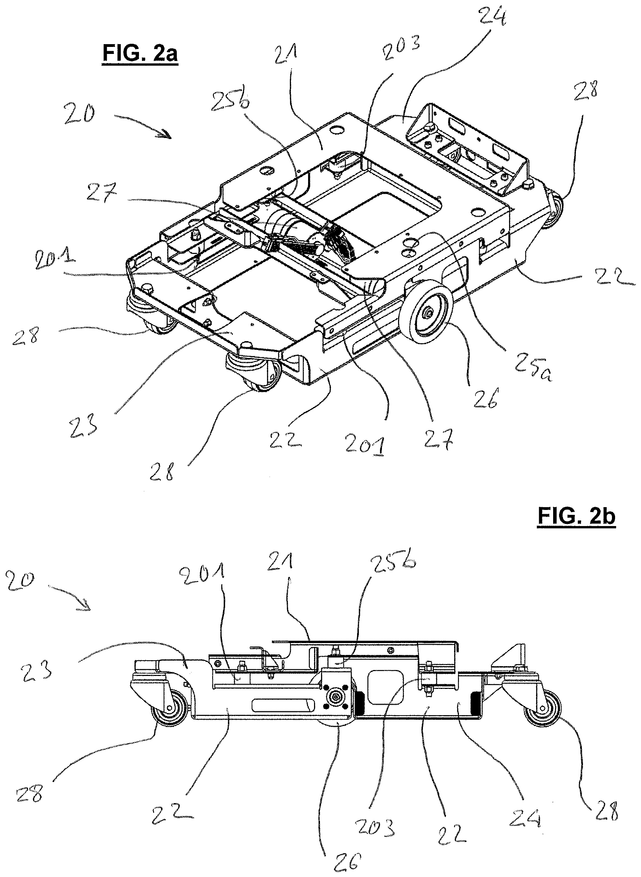

On a représenté sur les **figure 2a et 2b****,** une vue en perspective et une vue en coupe selon le plan sagittal, d'un autre exemple de chariot à guidage automatique 20 selon l'invention, destiné à la manutention et/ou au transport d'une charge.

Ce chariot à guidage automatique 20 comprend un châssis principal 21 (représenté partiellement sur les figures 2a et 2b, par souci de lisibilité) articulé sur un châssis porteur 22.

Le châssis porteur 22 est formé de deux balanciers 23, 24, solidarisés par deux articulations élastiques 25, montés sur deux roues motrices 26 à entraînement différentiel. Chaque balancier 23, 24 présente deux roues folles 28 à son extrémité distale, fixées au corps du balancier dans des positions symétriques par rapport au plan transversal du châssis porteur 22.

Les deux silentblocs 25a, 25b sont montés respectivement du côté droit et du côté gauche des balanciers 23, 24, dans le plan transversal du chariot 20. Ils permettent de créer une liaison de type pivot entre les deux balanciers.

Par ailleurs, chaque balancier 23, 24 est solidarisé au châssis principal 21 par une première paire de silentblocs 201, respectivement par une deuxième paire de silentblocs 203.

Les silentblocs de chaque paire 201, 203 de silentbloc sont montés en vis-à-vis sur le corps des balanciers 23, 24, de chaque côté du plan sagittal du chariot à guidage automatique 20.

On notera que l'utilisation d'une paire de silentblocs 201, 203 permet de former une articulation élastique globale, s'apparentant à une liaison de type pivot, entre le balancier 23, 24 et le châssis principal 21.

### 6.3. Autres caractéristiques optionnelles et avantages de l'invention

Dans des variantes des modes de réalisation de l'invention détaillés ci-dessus, il peut également être prévu :
- de répartir différemment la charge entre les roues motrices et les roues folles en déplaçant la position des moyens d'articulations pour adapter les ratios de répartition et ainsi favoriser la stabilité du chariot ou l'adhérence des roues motrices ;
- d'utiliser trois paires de bielles identiques ou différentes ;
- que l'articulation à l'extrémité de certaines bielles soit une articulation à rotule ou un pivot ;
- d'utiliser des bielles à rotule sur un balancier et des bielles à pivot sur l'autre balancier.

## Revendications

1. Chariot à guidage automatique (10) pour le transport et/ou la manutention d'une charge, comprenant un châssis principal (11) destiné à recevoir ladite charge et un châssis porteur (12) comprenant deux balanciers (13, 14, 23, 24) montés pivotants l'un par rapport à l'autre à l'aide de moyens de pivotement, s'étendant respectivement vers l'avant et l'arrière dudit chariot et équipés chacun d'au moins une roue folle (18, 28),
un desdits balanciers étant monté sur deux roues à entraînement différentiel (16, 26) dont l'axe est situé dans le plan transversal dudit châssis principal, ledit chariot comprenant des moyens d'articulation dudit châssis principal par rapport audit balancier s'étendant vers l'avant et par rapport audit balancier s'étendant vers l'arrière, configurés de sorte que l'assemblage dudit châssis principal avec ledit châssis porteur soit sensiblement isostatique,
**caractérisé en ce que** lesdits moyens d'articulation comprennent une première, une deuxième et une troisième paires de bielles, les bielles de chaque paire de bielles étant montées en vis-à-vis de chaque côté du plan sagittal dudit chariot, ladite première paire de bielles (101) et ladite deuxième paire de bielles (102) étant solidarisées à l'un desdits balanciers et ladite troisième paire de bielles (103) étant solidarisée à l'autre balancier, les axes de chacune des bielles desdites première et deuxième paires de bielles s'étendant en le coupant jusqu'à un même axe transversal, de sorte à former une liaison pivot entre ledit balancier auxquelles lesdites première et deuxième paires de bielles sont solidarisées et ledit châssis principal.

2. Chariot selon la revendication 1, **caractérisé en ce que** l'axe de pivotement desdits balanciers l'un par rapport à l'autre est situé dans le plan transversal dudit chariot.

3. Chariot selon la revendication 1, **caractérisé en ce que** ledit axe transversal s'étend sensiblement au niveau du point le plus bas dudit chariot.

4. Chariot selon l'une quelconque des revendications 1 à 3, **caractérisé en ce qu'**au moins un desdits balanciers est équipé de deux roues folles (28) montées sur celui-ci dans des positions symétriques par rapport au plan sagittal dudit chariot.

5. Chariot selon l'une quelconque des revendications 1 à 4, **caractérisé en ce que** lesdites deux roues à entraînement différentiels sont entraînées en rotation par deux moteurs (17, 27) commandés de façon indépendante, fixés au même balancier que lesdites roues à entraînement différentiel.

6. Chariot selon l'une quelconque des revendications 1 à 5, **caractérisé en ce que** lesdits moyens de pivotement desdits balanciers l'un par rapport à l'autre comprennent deux pivots (15) ou deux rotules montés sur lesdits balanciers dans ledit plan transversal, du côté gauche et droit dudit chariot.

7. Chariot selon l'une quelconque des revendications 1 à 6, **caractérisé en ce que** lesdits moyens de pivotement desdits balanciers l'un par rapport à l'autre comprennent deux articulations élastiques montées entre lesdits balanciers dans ledit plan transversal, du côté gauche et droit dudit chariot.

8. Chariot selon la revendication 7, **caractérisé en ce que** lesdites articulations élastiques (25) sont des silentblocs.

## Patentansprüche

1. Wagen mit automatischer Führung (10) zum Transport und/oder zur Handhabung einer Last, umfassend einen Hauptrahmen (11), der zur Aufnahme der Last bestimmt ist, und einem Tragrahmen (12), der zwei mit Hilfe von Schwenkmitteln relativ zueinander schwenkbar gelagerte Schwingen (13, 14, 23, 24) aufweist, die sich jeweils zur Vorder- und Rückseite des Wagens erstrecken und jeweils mit mindestens einem Losrad (18, 28) ausgestattet sind,
wobei eine der Schwingen auf zwei Rädern (16, 26) mit Differentialantrieb angebracht ist, deren Achse in der Querebene des Hauptrahmens liegt, wobei der Wagen Mittel zum Anlenken des Hauptrahmens in Bezug auf die sich nach vorn erstreckende Schwinge und in Bezug auf die sich nach hinten erstreckende Schwinge umfasst, die derart ausgelegt sind, dass der Zusammenbau des Hauptrahmens mit dem Tragrahmen im Wesentlichen isostatisch ist,
**dadurch gekennzeichnet, dass** die Mittel zum Anlenken ein erstes, ein zweites und ein drittes Paar von Pleuelstangen umfassen, wobei die Pleuelstangen jedes Paars von Pleuelstangen gegenüberliegend auf jeder Seite der Sagittalebene des Wagens angebracht sind, wobei das erste Paar von Pleuelstangen (101) und das zweite Paar von Pleuelstangen (102) fest mit einer der Schwingen verbunden ist und das dritte Paar von Pleuelstangen (103) fest mit der anderen Schwinge verbunden ist, wobei sich die Achsen jeder der Pleuelstangen des ersten und zweiten Paars von Pleuelstangen schneidend bis zu einer gleichen Querachse erstrecken, so dass eine Schwenkverbindung zwischen der einen Schwinge, an der das erste und zweite Paar von Pleuelstangen fest angebracht sind, und dem Hauptrahmen gebildet wird.

2. Wagen nach Anspruch 1, **dadurch gekennzeichnet, dass** die Schwenkachse der Schwingen relativ zueinander in der Querebene des Wagens liegt.

3. Wagen nach Anspruch 1, **dadurch gekennzeichnet, dass** sich die Querachse im Wesentlichen im Bereich des tiefsten Punkts des Wagens erstreckt.

4. Wagen nach einem der Ansprüche 1 bis 3, **dadurch gekennzeichnet, dass** mindestens eine der Schwingen mit zwei Losrädern (28) ausgestattet ist, die an ihr in Positionen angebracht sind, die symmetrisch zur Sagittalebene des Wagens sind.

5. Wagen nach einem der Ansprüche 1 bis 4, **dadurch gekennzeichnet, dass** die beiden Räder mit Differentialantrieb von zwei unabhängig voneinander gesteuerten Motoren (17, 27) in Drehung versetzt werden, die an derselben Schwinge wie die Räder mit Differentialantrieb befestigt sind.

6. Wagen nach einem der Ansprüche 1 bis 5, **dadurch gekennzeichnet, dass** die Schwenkmittel der Schwingen relativ zueinander zwei Drehzapfen (15) oder zwei Kugelgelenke umfassen, die in der Querebene auf der linken und rechten Seite des Wagens an den Schwingen angebracht sind.

7. Wagen nach einem der Ansprüche 1 bis 6, **dadurch gekennzeichnet, dass** die Schwenkmittel der Schwingen relativ zueinander zwei elastische Gelenke umfassen, die in der Querebene auf der linken und rechten Seite des Wagens zwischen den Schwingen angebracht sind.

8. Wagen nach Anspruch 7, **dadurch gekennzeichnet, dass** die elastischen Gelenke (25) Silentblöcke sind.

## Claims

1. An automated guided trolley (10) for the transport and/or handling of a load, **characterised in that** it comprises a main frame (11) for receiving said load and a carrier frame (12) comprising two walking beams (13, 14, 23, 24) pivotally mounted relative to each other by means of pivoting means, respectively extending towards the front and rear of said trolley and each equipped with at least one idler wheel (18, 28),
one of said walking beams being mounted on two differential-drive wheels (16, 26) whose axis is situated in the transverse plane of said main frame, said trolley comprising hinge means of said main frame relative to said walking beam extending forwardly and relative to said rearwardly extending walking beam, configured so that the assembly of said main frame with said carrier frame is substantially isostatic,
wherein said articulation means comprise a first, a second and a third pair of connecting rods, the connecting rods of each pair of connecting rods being mounted opposite each other, on each side of the sagittal plane of said trolley, said first pair of connecting rods (101) and said second pair of connecting rods (102) being secured to one of said walking beams and said third pair of connecting rods (103) being secured to the other walking beam, the axes of each of the connecting rods of said first and second connecting rods extending to a same transverse axis and cutting the same, so as to form a pivot connection between said beam to which said first and second pairs of connecting rods are secured and said main frame.

2. The trolley according to claim 1, wherein the pivot axis of said walking beams relative to each other is located in the transverse plane of said trolley.

3. The trolley according to claim 1, wherein said transverse axis extends substantially at the lowest point of said trolley.

4. A trolley according to any one of claims 1 to 3, wherein at least one of said walking beams is equipped with two idler wheels (28) mounted thereon in positions symmetrical with respect to the sagittal plane of said trolley.

5. A trolley according to any one of claims 1 to 4, wherein said two wheels with differential drives are rotated by two motors (17, 27) controlled independently and in that said motors are fixed to the same walking beam as said wheels with differential drive.

6. A trolley according to any one of claims 1 to 5, wherein said means for pivoting said walking beams relative to each other comprise two pivots (15) or two ball joints mounted on said walking beams in said transverse plane, on the left and right side of said trolley.

7. A trolley according to any one of claims 1 to 6, wherein said means for pivoting said walking beams relative to each other comprise two elastic joints mounted on said walking beams in said transverse plane, on the left and right side of said trolley.

8. The trolley according to claim 7, wherein said elastic joints (25) are rubber suspensions.
